# EUROPÄISCHE PATENTSCHRIFT

(11) **EP 0 724 992 B1**
(45) Veröffentlichungstag und Bekanntmachung des Hinweises auf die Patenterteilung: **30.06.1999**
(21) Anmeldenummer: 96100460.3
(22) Anmeldetag: 13.01.1996
(51) Int. Cl.: B60S 1/52

(54) **Beheizbare Spritzdüse für Scheibenwaschanlagen**
Heated nozzle for windscreen washer systems
Buse chauffée pour systèmes lave-glace de pare-brise

(30) Priorität: 01.02.1995 DE 19503068
(43) Veröffentlichungstag der Anmeldung: 07.08.1996
(73) Patentinhaber: A. Raymond & Cie, F-38028 Grenoble-Cédex (FR)
(72) Erfinder: Ziereisen, Peter, D-79279 Vörstetten (DE)
(74) Vertreter: Kirchgaesser, Johannes, Dipl.-Ing.

(56) Entgegenhaltungen:
- DE-A- 3 039 663
- DE-A- 3 124 112
- DE-A- 3 521 024
- US-A- 4 088 269

## Beschreibung

Die Erfindung bezieht sich auf eine beheizbare Spritzdüse für Scheibenwaschanlagen mit einem Düsenkörper aus thermoplastischem, elektrisch leitfähigem Kunststoff und am Düsenkörper vorstehenden elektrischen Anschlußkontakten zum Anschluß von Heizstrom, durch welchen die Spritzdüse im Winter vor Vereisung geschützt wird.

Der durch die Spritzdüse hindurchgeführte Wasserkanal besitzt gemäß **DE - GM 84 31 147** an seiner Stirnseite eine Lagerbohrung, in welcher eine kugelförmige Düse zur Erzeugung eines feinen Wasserstrahls verdrehbar gelagert ist. Diese Lagerung bietet die Möglichkeit, die Spritzrichtung der Düse nach dem Einbau des Düsenkörpers im Blech der Motorhaube optimal auf den Wischbereich des Scheibenwischers auszurichten.

Die kugelförmigen Düseneinsätze sind üblicherweise aus Messing oder sonst einer geeigneten Metall-Legierung hergestellt, welche eine gute Verschleißfestigkeit bietet. Da diese Metallkugeln durch die Wärmezufuhr von der Düsenheizung her ständig warmgehalten werden, sind aufgrund der Kalkhaltigkeit des Spritzwassers Kalkablagerungen im Düsenkanal nicht zu vermeiden. Diese müssen von Zeit zu Zeit aufgestochert werden, damit der Düseneinsatz seine Spritzfunktion erfüllen kann.

Aufgabe der Erfindung ist es, die Kugeln so auszubilden, daß derartige Kalkablagerungen vermieden werden.

Dies wird nach der vorliegenden Erfindung dadurch erreicht, daß der kugelförmige Düseneinsatz aus einem, dem Material des Düsenkörpers entsprechenden, thermoplastischen Kunststoff hergestellt ist.

Hierdurch ergibt sich ein gleichmäßiger Wärmeübergang vom Düsenkörper zur Kugel, welcher Kalkablagerungen verhindert. Außerdem wird aufgrund der gleichen Ausdehnungskoeffizienten eine gleichbleibende Lagerreibung zwischen Kugel und Lagerbohrung erreicht, so daß die auf den Wischbereich ausgerichtete Kugel ihre Strahlrichtung beibehält.

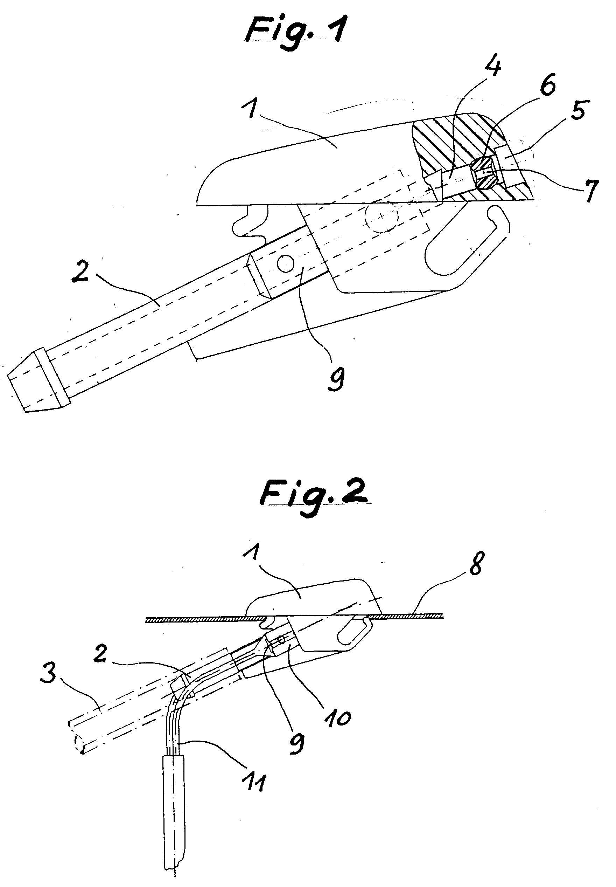

In der Zeichnung ist ein Ausführungsbeispiel der Erfindung dargestellt, welches nachfolgend näher erläutert werden soll. Es zeigt
- Fig. 1: einen vergrößerten Düsenkörper in der Seitenansicht mit Teilschnitt durch den Düsenkopf und
- Fig. 2: die Spritzdüse im eingebauten Zustand mit angeschlossenem Heizkabel.

Die Spritzdüse besteht im wesentlichen aus einem Düsenkörper 1 aus thermoplastischem Kunststoff, welcher durch Einlagerungen von beispielsweise Stahlfaser, Silbernitrat oder anderen geeigneten Zusätzen elektrisch leitfähig gemacht worden ist. An der Unterseite des Düsenkörpers 1 ist ein Anschlußstutzen 2 zum Aufstecken eines Wasserschlauches 3 angeformt, welcher mit einer nicht dargestellten Wasserpumpe einer Waschanlage verbunden wird.

Der Düsenkörper 1 ist von einem Wasserkanal 4 durchzogen und weist an seiner Wasseraustrittsseite eine im Durchmesser etwas größere Lagerbohrung 5 auf, in welcher ein kugelförmiger Düseneinsatz 6 verdrehbar gelagert ist. Dieser Düseneinsatz 6 besitzt eine dünne Bohrung 7, durch welche das austretende Spritzwasser in einem feinen Strahl gebündelt wird.

Kugel 6 und Lagerbohrung 5 sind so aufeinander abgestimmt, daß die von außen eingedrückte Kugel 6 zwar fest, d.h.spielfrei eingebettet ist, sich aber durch Einführen einer Nadel in die Bohrung 7 mit etwas Krattaufwand in die gewünschte Richtung verdrehen läßt. Auf diese Weise ist es nach dem Einbau des Düsenkörpers in das Blech 8 der Motorhaube möglich, die Spritzrichtung der Düse 6 optimal auf die Windschutzscheibe auszurichten.

Im Düsenkörper 1 sind zwei flache metallische Kontaktstäbe 9 eingespritzt, welche an der Unterseite des Düsenkörpers 1 herausragen. Auf diese werden die Flachstecker 10 von Strom führenden Leitungen 11 aufgesteckt, um den Düsenkörper 1 im Bedarfsfall mit Heizstrom versorgen zu können.

Um die Kugelbohrung 7 vor Verstopfung durch Kalkablagerungen zu schützen, ist der kugelförmige Düseneinsatz 6 ebenfalls aus thermoplastischem Kunststoff hergestellt, und zwar vorzugsweise aus dem gleichen Material wie der Düsenkörper 1. Dadurch ist ein gleichmäßiger Wärmeübergang vom beheizten Düsenkörper 1 auf die Kugel 6 gewährleistet wodurch der bei Metallkugeln bekannte Verkalkungseffekt verhindert wird. Außerdem hat die Kugel den gleichen Ausdehnungskoeffizienten wie der Düsenkörper 1, so daß die Lagerreibung zwischen Kugel 6 und Lagerbohrung 5 sich nicht verändert und die Kugel 6 nach dem Ausrichten ihre Strahlrichtung unverändert beibehält.

## Patentansprüche

1. Spritzdüse für Scheibenwaschanlagen, bestehend aus einem Düsenkörper (1) aus thermoplastischem, elektrisch leitfähigem Kunststoff mit einem an seiner Unterseite angeformten Anschlußstutzen (2) zum Aufstecken eines Wasserschlauches (3) und am Düsenkörper vorstehenden Kontaktstäben (9) zum Anschluß von Heizstrom, wobei der durch Anschlußstutzen und Düsenkörper führende Wasserkanal an der Stirnseite des Düsenkörpers eine Lagerbohrung aufweist, in welcher ein kugelförmiger Düseneinsatz (6) verdrehbar gelagert ist,
**dadurch gekennzeichnet,** daß der kugelförmige Düseneinsatz (6) aus einem dem Material des Düsenkörpers (1) entsprechenden thermoplastischem Kunststoff hergestellt ist.

## Claims

1. A spray nozzle for windscreen washer installations comprising a nozzle body (1) of electrically conductive thermoplastic material having a connecting portion (2) formed at its underside for fitting a water hose (3) thereon and contact bars (9) projecting at the nozzle body for the connection of heating current, wherein the water passage which leads through the connecting portion and the nozzle body has at the end of the nozzle body a mounting bore in which a ball-shaped nozzle insert (6) is rotatably mounted, characterised in that the ball-shaped nozzle insert (6) is made from a thermoplastic material corresponding to the material of the nozzle body (1).

## Revendications

1. Buse de pulvérisation pour systèmes lave-glace, comprenant un corps de buse (1) réalisé dans une matière de synthèse thermoplastique électriquement conductrice et comportant à sa partie inférieure une tubulure de raccordement (2) venue de moulage pour l'emmanchement d'un flexible d'amenée d'eau (3) et des barrettes de contact (9) de raccordement à la source de courant de chauffage, faisant saillie sur le corps de buse, le canal de passage d'eau ménagé dans la tubulure de raccordement et le corps de buse comportant en l'occurrence, au niveau de sa face antérieure, un alésage d'assise, dans lequel une buse rapportée de forme sphérique est montée de manière pivotante, caractérisée en ce que la buse rapportée de forme sphérique (6) est fabriquée à partir d'une matière de synthèse thermoplastique correspondant à la matière constitutive du corps de buse (1).
